# EUROPÄISCHE PATENTANMELDUNG

(11) **EP 1 027 824 A1**
(43) Veröffentlichungstag der Anmeldung: **16.08.2000**
(21) Anmeldenummer: 00810074.5
(22) Anmeldetag: 27.01.2000
(51) Int. Cl.: A01J 17/00, A23D 7/05

(54) **Verfahren und Vorrichtung zum kontinuierlichen Kühlen und Fördern einer fetthaltigen Masse**

(30) Priorität: 10.02.1999 CH 25099
(71) Anmelder: Egli AG Maschinen- und Apparatebau Bütschwil, 9606 Bütschwil (CH)
(72) Erfinder: Egli, Rudenz, 9606 Bütschwil (CH)
(74) Vertreter: Müller, Christoph Emanuel

(57) **Zusammenfassung**

Es wird eine Vorrichtung zum gekühlten Bearbeiten einer fetthaltigen Masse mit einem bestimmten Wasseranteil wie Butter oder Buttermischung beschrieben. Zur Kühlung wird die Butter auf die Oberfläche (11) eines Kühlzylinders (10) aufgetragen, über einen Winkelbereich (α) auf der Kühlzylinder (10) weiterbewegt und von der Oberfläche (11) der Kühlzylinder (10) entfernt.

## Beschreibung

Die Erfindung betrifft eine Vorrichtung und ein Verfahren zur Bearbeitung einer fetthaltigen Masse mit einem bestimmten Wasseranteil, wie Butter oder Buttermischungen nach dem Oberbegriff der unabhängigen Patentansprüche.

Bei den bekannten industriellen Anlagen zur Herstellung von Butter werden konventionelle rotierende Zylinder eingesetzt, in die Rahm eingeführt oder eingespritzt wird. Beim Auftreffen von Rahmtropfen auf die mit hoher Geschwindigkeit rotierende Wand, treten aufgrund der Beschleunigung hohe Scherkräfte auf. Damit wird in der beabsichtigten Weise der Rahm in Fett- und Wasserbestandteile getrennt. Die Rotationsgeschwindigkeit derartiger Zylinder beträgt etwa 600 bis 1200 Umdrehungen pro Minute. Der Durchmesser eines solchen Zylinders liegt bei etwa 60 cm. Durch die grosse Scherkraft wird in konventionellen Anlagen sehr schnittfeste Butter erzeugt, wobei der Restfettgehalt in der Buttermilch relativ hoch ist.

Die auf diese Weise erhaltene Butter wird aus verschiedenen Gründen weiterbearbeitet. Falls die Butter nicht zum sofortigen Verbrauch bestimmt ist, muss sie tiefgekühlt werden. Das industrielle Fördern von tiefgekühlter Butter mittels Pumpen ist aber aufgrund der Festigkeit von tiefgefrorener Butter nicht möglich. Ein weiterer Nachteil von mit bekannten Verfahren hergestellter Butter liegt in deren relativ schlechter Streichfähigkeit. Der Verbraucher wünscht sich eine Butter, die sich auch bei verhältnismässig tiefen Temperaturen leicht streichen lässt.

Aus EP 808 562 der Anmelderin ist es bekannt, fetthaltige Massen wie Butter gekühlt zu bearbeiten und zu fördern. Die darin vorgeschlagene Vorrichtung bzw. das Verfahren beruht darauf, dass eine fetthaltige Masse wie Butter mittels Förderschnecken gefördert werden. Um die Butter zu kühlen werden die Förderschnecken gekühlt. Es hat sich nun herausgestellt, dass unter gewissen Umständen die in EP 808 562 vorgeschlagene Förderung durch Förderschnecken eine optimale Kühlung nicht gewährleistet. Insbesondere durch die mechanische Walkarbeit während der Förderung kann die Butter trotz aktiver Kühlung nicht ausreichend abgekühlt werden.

Es ist deshalb eine Aufgabe der vorliegenden Erfindung, die aus der EP 808 562 bekannte Vorrichtung und das bekannte Verfahren weiter zu verbessern.

Erfindungsgemäss wird diese Aufgabe gemäss den Merkmalen des kennzeichnenden Teils der unabhängigen Patentansprüche gelöst.

Der Inhalt der EP 808 562, von welcher die vorliegende Erfindung ausgeht, wird hiermit durch Querverweis ausdrücklich in die vorliegende Anmeldung aufgenommen.

Gemäss der Weiterentwicklung der vorliegenden Erfindung wird die fetthaltige Masse mit einem bestimmten Wasseranteil wie Butter oder Buttermischungen (im Folgenden wird jeweils von Butter gesprochen, wobei alle fetthaltigen Massen mit Wasser-anteil umfasst werden) auf eine Oberfläche eines rotierenden Kühlzylinders gegeben. Die Masse wird über einen bestimmbaren Winkelbereich auf der Oberfläche des Zylinders mitgeführt und dabei gekühlt. Anschliessend wird die Masse von der Oberfläche des Kühlzylinders entfernt und gelagert oder weitergefördert.

Dadurch, dass die Butter verteilt auf der Oberfläche des Zylinders eine bestimmte Zeit verweilt, wird sie abgekühlt.

Der Winkelbereich wird vorzugsweise möglichst gross gewählt damit eine effektive Kühlung erzielt wird. Typischerweise beträgt der Winkelbereich wenigstens etwa 270°.

In einem bevorzugten Ausführungsbeispiel wird die Masse anschliessend von der Oberfläche des Kühlzylinders abgestreift. Es wären aber auch andere Mechanismen denkbar, beispielsweise durch Blasen von Luft durch in dem Zylinder angebrachte Öffnungen.

Vorzugsweise wird die Masse von einer Seite des Kühlzylinders her auf einen Oberflächenabsehnitt des Zylinders gegeben. Der Oberflächenabschnitt befindet sich dabei zum Zeitpunkt des Auftrags in einer etwa vertikal verlaufenden Lage.

Die Rotationsrichtung des Kühlzylinders wird bevorzugt so gewählt, dass die Butter nach dem Auftrag auf den Oberflächenabschnitt des Kühlzylinders zuerst nach oben bewegt wird. Die Butter wird vom Oberflächenabschnitt entfernt, wenn dieser in einer zweiten Lage nach unten gerichtet ist. Dabei fällt die von der Oberfläche entfernte Masse aufgrund der Gravitation nach unten, beispielsweise in einen Lagerraum oder auf unter dem Kühlzylinder angeordnete Fördermittel.

Im Gegensatz zu der EP 808 562 sind also die kühlbaren Fördermittel gemäss der vorliegenden Erfindung durch einen drehbar gelagerten Kühlzylinder gebildet. Ausserdem sind Auftragmittel, beispielsweise in der Form einer Verteildüse zum Auftragen der Masse auf die Oberfläche des Kühlzylinders und Entfernmittel, beispielsweise ein Abstreifer, zum Entfernen der Masse von der Oberfläche vorgesehen. Die Entfernmittel sind dabei bezogen auf die Drehrichtung des Kühlzylinders um einen Winkeldurchmesser von den Auftragmitteln beabstandet angeordnet.

Die Auftragmittel sind dabei vorzugsweise auf einer Seite des Kühlzylinders angeordnet, sodass die Masse auf einen etwa in einer vertikalen Lage verlaufenden Oberflächenabschnitt des Kühlzylinders auftragbar ist. Die Entfernmittel sind vorzugsweise so angeordnet, dass der Oberflächenabschnitt während dem Entfernen der Butter nach unten gerichtet ist.

Unterhalb des Kühlzylinders kann ausserdem ein Lagerraum und/oder Fördermittel zum weiterfördern der Masse vorgesehen sein.

Das erfindungsgemässe Verfahren bzw. die erfindungsgemässe Vorrichtung sind in einer Gesamtanlage der in EP 808 562 beschriebenen Form selbstverständlich besonders vorteilhaft einsetzbar.

Die auf den Kühlzylinder aufgegebene Butter weist eine Temperatur von etwa 16° C auf. Durch die Kühlung auf dem Kühlzylinder und nachfolgendes gekühltes Fördern mittels unter dem Zylinder angeordneten gekühlten Fördermitteln kann die Butter auf ca. 4° C abgekühlt werden.

Um eine Verbesserung der Streichfähigkeit der Butter oder Buttermischung zu erreichen, sind die Wassereinschlüsse auf eine Grösse von 4, vorzugsweise auf etwa 3 Mikrometer, zu verringern.

Die fetthaltige Masse kann am Ende der Fördereinrichtung, beispielsweise der Förderschnecke extrudiert und in Blöcke geschnitten werden. Auf diese Weise können direkt tiefgekühlte Blöcke der fetthaltigen Masse hergestellt werden, was mit herkömmlichen Förderelementen wie Pumpen nicht möglich wäre.

Eine andere vorteilhafte Anwendungsform des erfindungsgemässen Verfahrens ergibt sich, wenn abschliessend die fetthaltige Masse durch Kneten oder Walken mit einem kühlbaren Knetelement bearbeitet wird. Beim Kneten der fetthaltigen Masse wird die Masse aufgrund der wirkenden mechanischen Wechselwirkungen erwärmt. Dank der kühlbaren Knetelemente, beispielsweise hohle, von einem Kühlmedium durchflossene Elemente kann die Temperatur der fetthaltigen Masse während des Knetvorgangs dauernd in einem vorgegebenen Bereich gehalten werden. Besonders günstig ist die Anwendung dieses gekühlten Knetverfahrens in einem Verfahren zur Verbesserung der Streichfähigkeit einer fetthaltigen Masse mit einem Wassereinschluss, wie beispielsweise Butter oder Buttermischung. Die fetthaltige Masse wird bei einer Temperatur im Bereich von -2°C bis +6°C so lange geknetet, bis die Wassereinschlüsse im Fett eine durchschnittliche Grösse von höchstens 4 Mikrometer, vorzugsweise 3 Mikrometer erreichen. Damit sich die Butter im Laufe des Knetvorgangs nicht erwärmt, sind die Knetelemente kühlbar ausgebildet.

Eine Vorrichtung zum Verbessern der Streichfähigkeit einer fetthaltigen Masse mit Wassereinschlüssen, wie Butter oder Buttermischung besteht aus einer erfindungsgemässen Komponente zum gekühlten Fördern der fetthaltigen Masse und einer nachgeschalteten Komponente zum gekühlten Kneten der fetthaltigen Masse.

Weitere Vorteile der Erfindung ergeben sich aus den abhängigen Patentansprüchen und der nachfolgenden Beschreibung, in welcher die Erfindung anhand in den schematischen Zeichnungen dargestellten Austührungsbeispielen näher erläutert wird. Es zeigen:
- Figur 1: eine schematische Darstellung einer Förder- und Kühlanlage für Butter
- Figur 2: eine vergrösserte Darstellung der erfindungsgemässen Kühleinrichtung
- Figur 3: eine Darstellung der Kühleinrichtung im Querschnitt und
- Figur 4: eine Darstellung der Kühleinrichtung in der Draufsicht.

In den Figuren sind jeweils für dieselben Elemente die gleichen Bezugezeichen verwendet worden, und es gelten erstmalige Erklärungen für alle Figuren, wenn nicht ausdrücklich anders erwähnt.

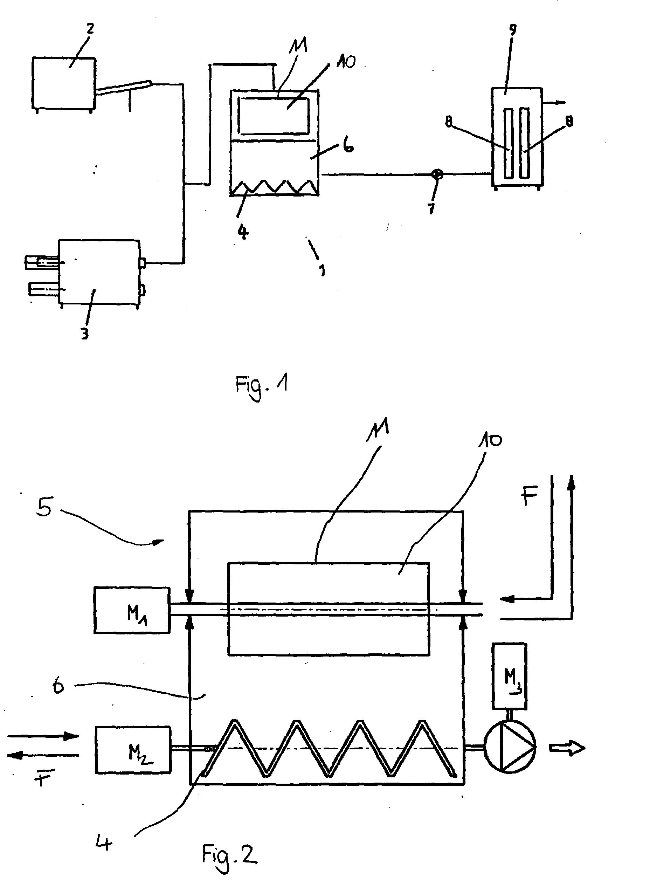

In Figur 1 ist schematisch eine Anordnung 1 zur Herstellung von streichfähiger Butter oder Buttermischungen dargestellt. Sie weist eine Butterungsmaschine 2 und einen parallel dazu geschalteten Schaberwärmetauscher 3 auf, die zusammen mit einer eine Kühlkammer 10 aufweisenden Kühleinrichtung 5 verbunden sind. Der Kühlzylinder 10 weist eine gekühlte Oberfläche 11 auf, auf welche die Butter gegeben werden kann. Die auf die Oberfläche 11 aufgetragene Butter wird durch Rotation des Kühlzylinders weitergefördert und an einer bestimmten Stelle von der Oberfläche 11 entfernt und weiterverarbeitet. Der Kühleinrichtung 5 ist ein gekühlter und mit einem im wesentlichen horizontalen wendelförmigen Förderelement 4 versehenen Lagerraum 6 nachgeschaltet, der über ein Fördermittel 7 wie in EP 808 562 gezeigt an einer Knetelemente 8 aufweisenden Kneteinrichtung 9 angeschlossen sein kann. Die Fördermittel 7 und die Kneteinrichtung 9 sind dabei kühlbar ausgebildet. Das Fördermittel 7 kann eine Pumpe sein.

Figur 2 zeigt eine vergrösserte Darstellung der Kühleinrichtung 5, welche im wesentlichen aus einen Kühlzylinder 10 besteht.

Der Kühlzylinder 10 ist doppelwandig ausgebildet wird mit einer Kühlflüssigkeit F durchflossen, sodass die Oberfläche 11 gekühlt wird. Der Kühlzylinder 10 ist über einen Motor M₁ drehbar.

Unterhalb des Kühlzylinders 10 (die Bezeichnungen unterhalb und oberhalb beziehen sich im Rahmen der vorliegenden Anmeldung auf den Abstand von einer Standfläche) ist ein Lagerraum 6 zur Aufnahme der von der Oberfläche 11 des Kühlzylinders 10 entfernten Butter angeordnet. Im Lagerraum 6 sind zusätzliche gekühlte Fördermittel in der Form einer Förderschnecke 4 angeordnet. Die Förderschnecke 4 kann ebenfalls mit einem Kühlmedium F durchflossen werden und wird mit einem Motor M2 angetrieben. Nach Austritt aus der Kühlschnecke 4 wird die Masse über die in Figur 1 dargestellten Fördermittel 7, mittels einem Motor M3 weitergefördert und zusätzlichen Verarbeitungsschritten (optional) zugeführt.

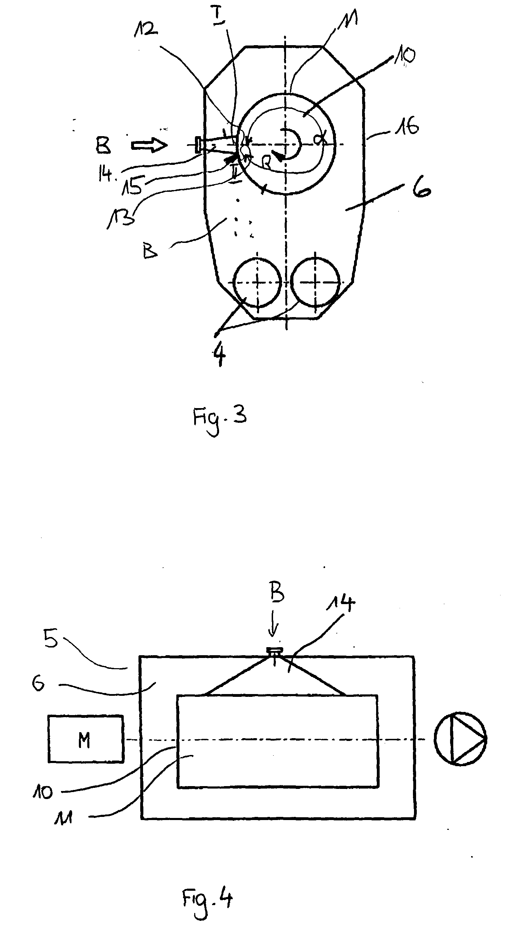

In Figur 3 ist die Kühleinrichtung 5 im Querschnitt dargestellt.

Die Kühleinrichtung 5 besteht im wesentlichen aus einem Gehäuse 16 in dem drehbar der Kühlzylinder 10 gelagert ist. Mittels einer Verteildüse 14 wird die Butter B auf die Oberfläche 11 des Kühlzylinders 10 gegeben.

Die Verteildüse 14 ist in einem seitlichen Abschnitt 12 des Kühlzylinders 10 angeordnet. Die Butter B wird auf einen Oberflächenabschnitt 13 des Kühlzylinders aufgetragen. Der Oberflächenabschnitt 13 befindet sich während des Auftrags in einer ersten Lage I, in welcher er etwa vertikal verläuft. Die auf die Oberfläche 11 des Kühlzylinders 10 gegebene Butter B wird in Rotationsrichtung R zusammen mit dem Kühlzylinder 10 weiterbewegt. Nachdem die Butter B auf der Oberfläche 11 des Kühlzylinders 10 einen Winkelbereich α durchlaufen hat, wird sie mit einem Abstreifer 15 von der Oberfläche 11 abgestreift. Während dem Abstreifvorgang befindet sich der Oberflächenabschnitt 13 in einer zweiten Lage II, in der die Oberfläche 11 nach unten gerichtet ist. Deshalb fällt die entfernte Butter aufgrund der Gravitation nach unten in einen unterhalb des Kühlzylinders 10 angeordneten Lagerraum 6 und auf im Lagerraum 6 angeordnete Förderschnecken 4.

In Figur 4 ist eine Draufsicht auf die Kühleinrichtung 5 gezeigt. Die Verteildüse 14 verteilt die Butter im wesentlichen über die gesamte Breite der Oberfläche 11 des Kühlzylinders 10. Dazu weist die Verteildüse eine sich aufweitende Öffnung auf.

Der Kühlzylinder 10 rotiert mit ca. 1 U/min. Die Temperatur der Oberfläche 11 des Kühlzylinders 10 beträgt 1 °C. Dadurch wird Butter mit einer Temperatur von 16°C durch Auftragen, Bewegen und Abtragen von der Kühizylinder 10 auf 4 °C abgekühlt.

## Patentansprüche

1. Verfahren zum kontinuierlichen Kühlen und Fördern einer fetthaltigen Masse (B) mit einem bestimmten Wasseranteil, wie Butter oder Buttermischung, wobei die Masse während der Förderung gekühlt wird,
dadurch gekennzeichnet, dass die Masse (B) auf eine Oberfläche (11) eines rotierenden Kühlzylinders (10) gegeben wird und dass die Masse über einen bestimmbaren Winkelbereich (α) auf der Oberfläche (11) des Kühlzylinders (10) mitgeführt und dann von dieser entfernt und gelagert und/oder weitergefördert wird.

2. Verfahren nach Anspruch 1, dadurch gekennzeichnet, dass die Masse zum Entfernen von der Oberfläche (11) des Kühlzylinders (10) abgestreift wird.

3. Verfahren nach einem der Ansprüche 1 oder 2, dadurch gekennzeichnet, dass die Masse über einen Winkelbereich (α) von wenigstens 270° auf der Oberfläche (11) des Kühlzylinders (10) mitgeführt wird.

4. Verfahren nach einem der Ansprüche 1 bis 3, dadurch gekennzeichnet, dass die Masse von einer Seite (2) her auf einen Oberflächenabschnitt (13) des Zylinders (10) gegeben wird, der zum Zeitpunkt des Auftrags in einer etwa vertikal verlaufenden Lage (I) ist.

5. Verfahren nach Anspruch 4, dadurch gekennzeichnet, dass die Rotationsrichtung (R) derart gewählt wird, dass die Masse nach Übergabe auf die Oberfläche (11) des Kühlzylinders (10) zuerst nach oben bewegt wird, und dass die Masse vom Oberflächenabschnitt (13) entfernt wird, wenn dieser sich in einer zweiten, nach unten gerichteten Lage (II) befindet, wodurch die Masse aufgrund der Gravitation auf unter dem Kühizylinder (10) liegende Fördermittel (4) oder in einen unter dem Kühizylinder (10) angeordneten Lagerraum (6) fällt.

6. Vorrichtung zum kontinuierlichen Kühlen und Fördern einer fetthaltigen Masse mit einem bestimmten Wasseranteil, wie Butter oder Buttermischungen,
mit kühlbaren Fördermitteln (7), dadurch gekennzeichnet, dass die Fördermittel eine drehbar gelagerten Kühizylinder (10) aufweisen,
wobei Auftragmittel (14) zum Auftragen der Masse auf die Oberfläche (11) des Kühlzylinders (10) und Entfernmittel (15) zum Entfernen der Masse von der Oberfläche (11) vorgesehen sind, die bezogen auf die Drehrichtung (R) des Kühlzylinders (10) um einen Winkelbereich (α) zueinander beabstandet sind.

7. Vorrichtung nach Anspruch 6, dadurch gekennzeichnet, dass die Auftragmittel wenigstens eine Verteildüse (14) aufweisen und dass die Entfernmittel im wesentlichen aus einem Abstreifer (15) bestehen.

8. Vorrichtung nach Anspruch 6 oder 7, dadurch gekennzeichnet, dass der Winkelbereich (α) mehr als 270° beträgt.

9. Vorrichtung nach einem der Ansprüche 6 bis 8, dadurch gekennzeichnet, dass die Auftragmittel (14) auf einer Seite (12) des Kühlzylinders (10) angeordnet sind, sodass die Masse auf einen in einer etwa vertikalen Lage (I) stehenden Oberflächenabschnitt (13) des Kühlzylinders auftragbar ist.

10. Vorrichtung nach einem der Ansprüche 6 bis 9, dadurch gekennzeichnet, dass die Entfernmittel (15) derart angeordnet sind, dass der Oberflächenabschnitt (13) beim Entfernen der Masse von der Oberfläche (11) des Kühlzylinders (10) nach unten gerichtet ist, wobei vorzugsweise unterhalb dem Kühizylinder (10) ein Lagerraum (6) und/oder Fördermittel (4) zum Weiterfördern der Masse angeordnet ist.
